Europäisches Patentamt

European Patent Office

Office européen des brevets

(11) Publication number: **0 434 591 A1**

# EUROPEAN PATENT APPLICATION

(21) Application number: 90500094.9

(22) Date of filing: 28.09.90

(51) Int. Cl.5: **A61C 8/00**

(30) Priority: 26.10.89 ES 8903608

(43) Date of publication of application:
26.06.91 Bulletin 91/26

(84) Designated Contracting States:
AT BE CH DE DK FR GB GR IT LI LU NL SE

(71) Applicant: MZ-4, S.A.
C. de Zamora, 103-105
Barcelona(ES)

(72) Inventor: Plana Rodrigeuz, Joaquin
Pla. Sarria 3
Barcelona(ES)
Inventor: Murtra Ferre, Jaume
Dtor. Ferran 31
Barcelona(ES)
Inventor: Saumell Llado, Jordi
Munteners 442
Barcelona(ES)

(74) Representative: Gomez-Acebo y Pombo, José
Miguel
c/o CLARKE, MODET & Co. Paseo de la
Castellana 164
E-28046 Madrid(ES)

(54) Process to obtain bone implant prosthesis and the implant prosthesis obtained by means of this process.

(57) Process to obtain bone implant prosthesis, comprising an insert (5) connected via its external end to an implant column (1), and a shock absorber (6), connected to the insert (5), which forms a foundation for a superstructure (3) forming the active part of a tooth, these elements being connected by means of an axle bolt.

In accordance with this invention, the shock absorber (6) is supermoulded onto the insert (5), forming a single piece with the elastic properties of a tooth, and eliminating the risk of fissures forming which would allow for penetration of organic fluids.

Particularly applicable to dental prosthesis.

EP 0 434 591 A1

FIG. 5

# PROCESS TO OBTAIN BONE IMPLANT PROSTHESIS AND THE IMPLANT PROSTHESIS OBTAINED BY MEANS OF THIS PROCESS

This invention refers to a process to obtain bone implant prosthesis, particularly dental prosthesis or implants, and the prosthesis which are obtained as a result of this process, in particular dental implants.

In order to simlify the description of this invention, reference will be made only to dental prosthesis or implants. However, it must be clarified from the outset that the invention is also relevant to other types of bone prosthesis or implants which are embedded in such a way that a section remains on the outside, to be receptive to or productive of automatic stress.

## BASIC PRINCIPLES OF THE INVENTION

The invention refers more specifically to a process for obtaining a dental prosthesis to be embedded in a pre-formed opening in the jaw bone, comprising a base piece or column which will be embedded in the bone opening, an intermediate piece or insert equipped with a wand for connection to the external end of the base piece or column via a screw hole, and a foundation piece or shock absorber of which one side is connected to the external end of the insert, the opposite end forming a foundation for a superstructure, this latter being shaped in such a way that it forms the active part of a tooth. These components are connected by means of an axle bolt.

The insert, shock absorber and superstructure are currently manufactured as individual pieces which have to be assembled and fixed together by firmly tightening the connecting screw, so that the insert and superstructure put the intermediate shock absorber under an initial, axial strain, causing a complete hermetic seal at the surfaces joined to the insert and superstructure, preventing organic fluids from reaching the inside of the implant strucutre and providing for automatic resilience of the implanted prosthesis in accordance with the properties of an organic tooth.

This existing structure works excellently when exposed to axial strain on the whole, i.e. perpendicular to the connected surfaces of the shock absorber and superstructure on the one hand, and the insert on the other. However, in practice it has been demonstrated that strain originating from a distinctly non-axial source, can result in the lateral components causing a compression differential at the shock absorber connection surfaces, giving rise to a possible strain failure of the shock absorber at the side of the implant affected by the lateral piece and, consequently, a possible fissure, thereby breaking the hermetic seal of the structure.

## DESCRIPTION OF THE INVENTION

The purpose of the invention is to eliminate or reduce this disadvantage as it refers to dental implants or known equivalent prosthesis.

In order to achieve this aim, the first feature of the invention involves the implant insert, as described above, being constructed using a metallic material, so that the end opposite that connected to the column forms a support for the shock absorber; it is then inserted into a mould so that said support end is located within a mould cavity, which delimits both the lateral surfaces of the shock absorber and its surfaces which will be connected to the superstructure of the prosthesis; a plastic material from which the shock absorber will be made is injected or pressed into the mould cavity, the assembly is allowed to cool and one piece is withdrawn, consisting of the insert and a supermoulded shock absorber.

A further advantage is that the shock absorber support consists of an axial cavity in the insert, at the end opposite that which will be connected to the column, a part of the shock absorber being formed within this cavity. Given that the insert and shock absorber interfaces which follow a radial path to the prosthesis axis are restricted to the narrow edge region encircling the axial cavity of the insert, the possibility of fissures appearing at these interfaces is practically eliminated. However, this possibility can be eliminated completely if the coinciding surfaces of the mould cavity and the insert are shaped in such a way that there is an annular space around the end coinciding with the mould cavity so that the supermoulded plastic is joined at one part of the side surfaces of said end.

The surfaces of the insert which connect with the shock absorber can be equipped with facilities to ensure for axial, rotational anchorage of the shock absorber moulded to the insert, e.g. the moulded shock absorber can be provided with axial anchorage facilities by means of forming grooves and/or annular ribs in the internal surface of the insert's axial cavity. It would be advantageous for such as axial anchorage groove to be present in the external surface of the insert end which coincides with the end of the annular extension of the mould cavity, thereby forming a reinforcement collar for the shock absorber end. The rotational anchorage facilities can be provided for by forming cavities in the surfaces of the axial cavity of the insert or its adjacent end, into which plastic will be introduced whist moulding the shock absorber, e.g. radial cuts at the edge of the insert, circling its axial cavity.

Finally, an axial perforation can be made in the moulded shock absorber, this taking the form of threaded opening to receive a screw for fixing the superstructure. However, in accordance with another feature of the invention, a further advantage would be that the mould cavity have a cylindrical and preferably threaded rod, projecting axially into the axial cavity of the insert, in such a way that once the plastic has been moulded and the rod withdrawn, a threaded screw hole will remain, destined to receive a screw for supporting the different parts of the implant.

In accordance with another feature of the invention, the prosthesis or implant of the type described above, is distinguished by the fact that it comprises a metallic insert of which one end has traditional facilities for connection to the column, whilst the other end has a supermoulded plastic body providing foundation surfaces for the superstructure and inherent connection facilities, this forming a shock absorber which is an integral part of the insert.

A further advantage is the end of the insert onto which the shock absorber is supermoulded, comprises an axial cavity within which a part of the shock absorber is embedded.

One of the latter developments with respect to this invention, is that the end of the shock absorber which is connected to the end of the insert, forms an overlap which encircles the edge of the insert adjacent to its axial cavity, covering the lateral surface of the insert adjacent to this edge.

The insert/ shock absorber assembly includes facilities to ensure axial, rotational anchorage of both components, e.g. grooves and/or annular ribs on the internal surface of the axial cavity of the insert, providing for axial anchorage. Moreover, such an axial anchorage groove may be made on the external surface of the end of the insert coinciding with the end of the shock absorber overlap, in the interior edge of which a reinforcement collar is embedded. The rotational anchorage facilities can consist of inlets or projections extending from the surface of the axial cavity of the insert or from its adjacent end, these former inter-relating to the having embedded projections or inlets of the shock absorber, e.g. radial cuts at the edge of the insert circling its axial cavity.

Finally, the shock absorber has an axial, threaded screw hole in the surface to be connected to the superstructure, destined to receive a screw which fixes the two parts together.

## BRIEF DESCRIPTION OF THE DRAWINGS

The attached drawings represent a non-restrictive example of the scope of this invention, in diagram form, showing phases possible during the implant obtention process and the recommended method for obtaining the implant via this process.

Figure 1 is an axial section of an insert piece which forms part of the implant;

Figure 2 is a face view of figure 1, seen from the right end;

Figure 3 is an axial section of the insert piece shown in figures 1 and 2, located within a mould cavity in order to form the shock absorber piece;

Figure 4 is also an axial section of the insert piece, after the shock absorber has been supermoulded onto the end of the insert piece;

Figure 5 is an axial semi-section of the single piece formed by the insert and shock absorber pieces during the moulding phases shown in figures 2 and 3;

Figure 6 is a partial axial section of the whole implant obtained during the process outlined in this invention.

## DESCRIPTION OF THE RECOMMENDED FORMS OF IMPLEMENTATION

Figure 6 represents a complete dental implant obtained during the process, this being the main objective of the invention. This implant consists of: an implant support piece of column (1) made of a biologically compatible material such as titanium; a single insert/ shock absorber piece (2); a dental prosthesis superstructure (3), and a screw (4) to fix the superstructure (3) to the insert/ shock absorber (2).

As with traditional methods, the implant end of the column (1) is rounded (11), and the column (1) has lateral grooves (not shown) for self-implantation in the bone opening by means of integration with the bone, a threaded screw hole (12) which opens out at the opposite end, and an enlarged area (13) at the mouth of this screw hole which acts as a foundation for the single piece formed by the insert/ shock absorber (2). The superstructure (3), in accordance with traditional methods, is made from a mterial commonly used in the dental industry, and its external shape, appropriate to the implant's location within the denture, has a usual type of assembly foundation formed by two annular surfaces (31 and 32) which are co-axial to the longitudinal axis of the implant, and are separated by a conical surface (33). It has an axial screw hole of two stepped diametres (34 and 35) and, if required, can be formed within a metallic superstructure reinforcement web (not shown). The screw head (41) is housed in the wide part (35) of the screw hole protruding from the crown of the dental piece and sealed with a suitable paste cap (36).

The process described in this invention is more specifically aimed at obtaining s single insert/ shock absorber piece (2) which, whilst consisting of one, inseparable piece, comprises both an insert piece (5) and a shock abscrber (6) which will function in the same way as the conventional inserts and shock absorbers used in accordance with present day techniques. However, the possibility of a fissure forming between these two parts is eliminated, together with the risk of organic fluids entering the implant should it be subjected to predominantly lateral stress.

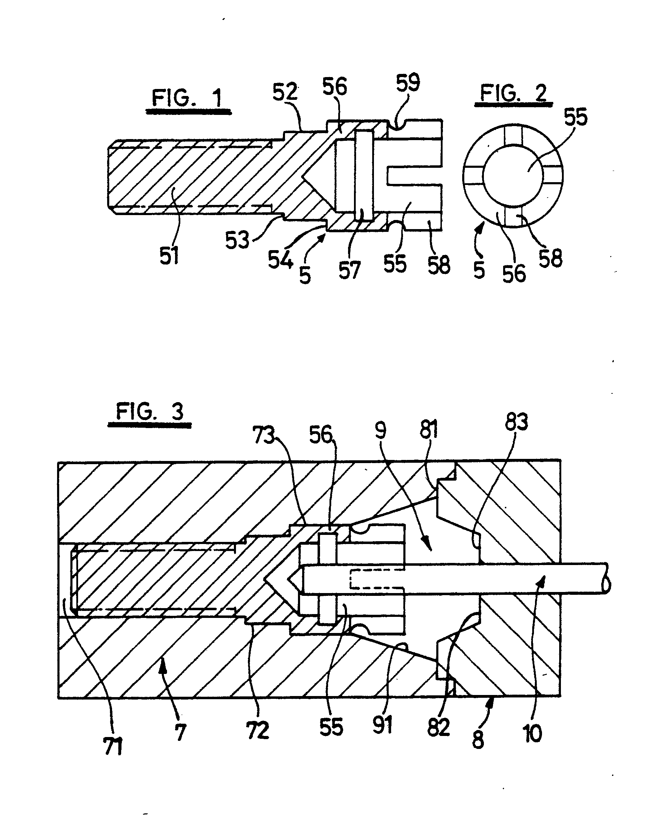

The first phase of the process consists of constructing the insert piece (5 - figures 1 and 2) from a metallic material of high mechanical and chemical resistance e.g. titanium, one of the ends of this piece (see to the left of figure 1) having a threaded wand (51) which will coincide with the threaded screw hole (12) of the column (1). The insert also has a centering collar (52) with a greater diametre, delimitted by two surfaces (53 and 54) which are orthogonal to the implant axis. The above method ensures that, as in conventional methods, the insert phase (5) is firmly connected within the foundation (13) of the column (1).

The opposite end of the insert piece (5 - see to the right of figure 1) is made operational by means of any conventional method in accordance with the invention, in such a way that an axial screw hole (55) is formed within it, thereby forming a casing with lateral walls (56), an internal annular groove (57), four diametrically opposite longitudinal cuts (58) and an external annular grove (59) which unites the base parts of these longitudinal cuts.

The insert (5) obtained in this way is inserted into a mould consisting of two mould-sections (7 and 8) which close at the joint plane (81) by means of conventional methods. One mould-section (7) has an axial screw hole (71) with steppings (72 and 73) of a size which enables the threaded shank (51), the step (52) and the external surface of the wall (56) of the insert piece (5) to be appropriately accommodated up to the level of the external annular groove (59). The mould cavity (9) is thereby formed, its surfaces (91) defining the lateral surfaces (37 in figure 6) of the shock absorber. The other mould-section (8) which is connected to the latter (7) as shown in figure 3, has surfaces (81, 82 and 83) which define surfaces (31, 32 and 33) of the shock absorber (3). The mould cavity structure is completed by introducing a cylindrical rod (10) through the axial screw hole (84) of the mould-section (8) to the depth shown in figure 3. The lateral surface of this rod (10) can be filleted to coincide with the thread of the screw (4) so that this thread is reproduced within the resulting opening of the moulded piece.

As apparent in figure 3, the result of this operation is that the screw hole (55) of the insert (5) coincides with the mould cavity (9), forming an integral part of this, and that the external surface of the wall (56) of said piece is located within this mould cavity (9).

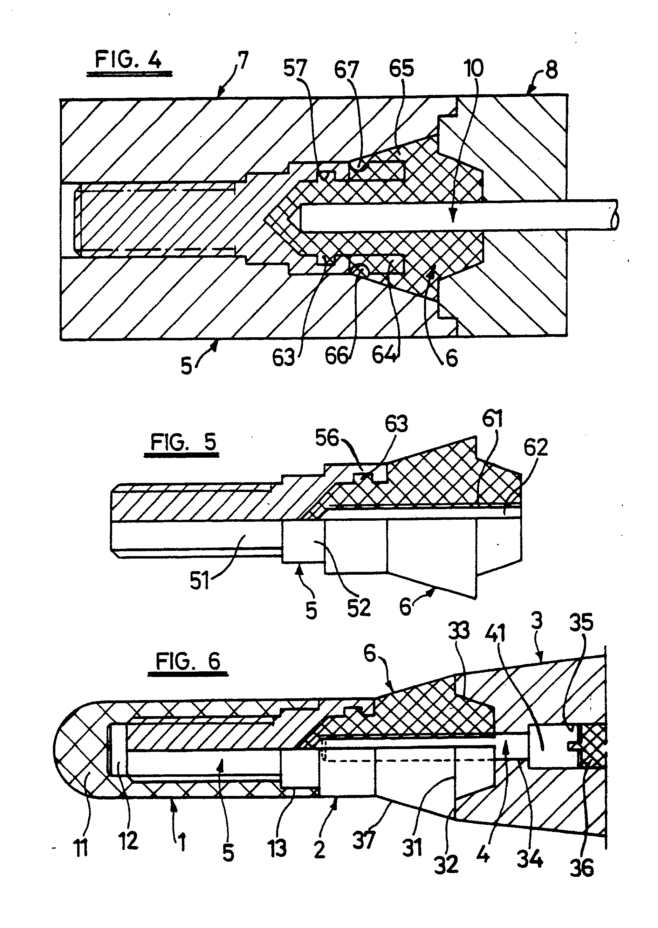

The moulding operation is then carried out using any conventional pressing or injection method and a suitable material such as titanium, completely filling the mould cavity (9) as shown in figure 4, to form the shock absorber (6), which will be closely attached to the corresponding surfaces of the insert piece (5).

Once the assembly has been cooled and unmolding undertaken, a single piece (2) is obtained (see figure 5, showing all the elements described above), including the thread (61) of the screw hole (62) formed by the cylindrical rod (10). This single piece (2) can be inserted directly into the already embedded column (1), by means of one operation, replacing the two separate pieces (insert and shock absorber) and the two operations necessary to insert them.

Figure 4 shows that the shock absorber (6) is completed embedded within the screw hole (55) of the insert (5), firm axial support being provided by the annular rib (63) which is located within the annular groove (57) of the insert (5). Rotational connection is ensured by the material (64) lodged within the cuts (58 in figures 1 and 2) and, in addition to this, the overlap part of the shock absorber which encircles the end of the insert (5) is completed anchored by the edge roll connection (66) located in the groove (59).

The above description shows that this invention achieves, to a very great extent, its proposed objectives. It is particularly true that the problem arising with previous methods regarding the insert/ shock absorber joint is completely eliminated. In addition, the number of pieces and assembly operations necessary have been reduced, giving obvious advantages with regard to handling, particularly important when taking into account the small size of usual shock absorbers.

This invention does not cover supplementary details and other non-essential construction characteristics, relevant to its implentation: this is included within the scope of the following patent claims:

## Claims

1. Process to obtain bone implant prosthesis, comprising a base piece or column (1) embedded in an opening formed in the bone, an intermediate piece or insert (5) equipped with a wand for connection to the external end of the column (1) via a screw hole, and a foundation piece or shock absorber (6) of which one side is connected to the external end of the insert (5), the opposite end forming a foundation for a superstructure, this latter being shaped in such a way that it forms the active part of a tooth, these components being connected by means of an axle bolt; distinguished by the fact that the insert (5) is constructed in such a way that the end opposite that connected to the column (1) forms a support for the shock absorber (6), the operational insert (5) is inserted into a mould so that the end supporting the shock absorber (6) is located within a mould cavity (9) which delimits both the lateral surfaces (9) of the shock absorber (6) and its surfaces (81-83) which will be connected to the superstructure (3) of teh prosthesis, a plastic material is injected or pressed into the mould cavity, this destined to form the shock absorber (6), the assembly is cooled and a single piece (2) is unmolded, consisting of the insert piece (5) and a supermoulded shock absorber (6).

2. Process as in patent claim 1, distinguished by the fact that the support of the shock absorber (6) is provided by an axial cavity (55) in the insert (5), at the end opposite that which will be connected to the column (1), so that a part of the shock absorber (6) is moulded within this cavity.

3. Process as in patent claims 1 and 2, distinguished by the fact that the coinciding surfaces of the mould cavity (8) and the insert piece (5) are shaped in such a way that there is an annular shape around the end, coinciding with the mould cavity (9) so that the supermoulded plastic fills this space, forming an overlap (65), jointed at one part of the lateral surface of said end.

4. Process as in patent claims 1 and 2, distinguished by the fact that surfaces of the insert (5) connecting with those of the shock absorber (6) provide for axial and rotational anchorage facilities for the shock absorber (6) moulded on the insert (5).

5. Process as in patent claims 1, 2 and 4, distinguished by the fact that the axial anchorage facilities of the moulded shock absorber (6), consist of grooves and/or annular ribs (57) on the internal surface of the axial cavity (55) of the insert piece (5).

6. Process as in patent claims 1, 2, 4 and 5, distinguished by the fact that an axial anchorage groove (57) is formed on the external surface of the end of the insert (5), this coinciding with the end of the annular extension of the mould cavity (9) and causing a reinforcement collar (66) to be moulded for the end of the shock absorber (6).

7. Process as in patent claims 1, 2 and 4, distinguished by the fact that the rotational anchorage facilities are formed by means of cavities in the surfaces of the axial cavity of the insert (5) or at the end adjacent to this, into which the plastic in introduced during the shock absorber (6) moulding phase.

8. Process as in patent claims 1, 2, 4 and 7, distinguished by the fact that the rotational anchorage facilities are formed by means of making longitudinal cuts (58) at the edge of the insert (5) which encircles its axial cavity (55).

9. Process as in patent claims 1 and 2, distinguished by the fact that the mould cavity (9) has a cylindrical rod, preferably threaded, this projecting in an axial direction within the axial cavity (55) of the insert (5), so that once the plastic moulding phase has been carried out and the rod is withdrawn, a threaded screw hole (62) has been formed destined to receive the screw (4).

10. Bone implant prosthesis which comprises a base piece or column (1) embedded in an opening in the bone, an intermediate piece or insert (5) equipped with a wand for connection to the external end of the base piece or column (1) via a screw hole, and a foundation piece or shock absorber (6) of which one side is connected to the external end of the insert, the opposite end forming a foundation for a superstructure, this latter being shaped in such a way that it forms the active part of a tooth, these components being connected by means of an axle bolt; distinguished by the fact that it comprises a metallic insert (5) of which one end is connected to the column (1) by means of traditional facilities (51), whilst the other end has a plastic shock absorber (6) moulded onto it, forming one sole piece, this shock absorber (6) having surfaces which act as a foundation for the superstructure and its fixings.

11. Prosthesis as in patent claim 10, distinguished by the fact that at the end of the insert (5) onto which the shock absorber (6) is supermoulded, there is an axial cavity (55), within which a part of the shock absorber (6) is embedded.

12. Prosthesis as in patent claim 10, distinguished by the fact that the end of the shock absorber (6) connected to the end of the insert (5) forms an overlap (65) which encircles the edge of this piece adjacent to its axial cavity (55) and covers the lateral surface of the insert (5) adjacent to this edge.

13. Prosthesis as in patent claim 10, distinguished by the fact that the insert/ shock absorber piece (2) is equipped with facilities to ensure for axial and rotational anchorage between the insert piece (5) and shock absorber (6).

14. Prosthesis as in patent claims 10 and 13, distinguished by the fact that the axial and rotational anchorage facilities comprise grooves and/or annular ribs on the internal surface of the axial cavity (55) of the insert (5).

15. Prosthesis an in patent claims 10, 13 and 14, distinguished by the fact that one of the axial anchorage grooves (59) is located on the external surface of the end of the insert (5) which coincides with the end of the overlap (65) of the shock absorber (6), and has a reinforcement collar (66) within the interior edge of this flap.

16. Prosthesis as in patent claims 10 and 13, distinguished by the fact that rotational anchorage facilities are provided for by inlets or projections extending from the surface of the axial cavity (55) of the insert (5) or from its adjacent end, there being corresponding embedded projections and openings in the shock absorber (6).

17. Prosthesis as in patent claims 10, 13 and 16, distinguished by the fact that rotational anchorage facilities are provided for by means of radial cuts (58) at the edge of the insert (5) encircling its axial cavity (55).

18. Prosthesis as in patent claim 10, distinguished by the fact that the shock absorber (6) has an axial threaded screw hole (62) at the surface connecting it to the superstructure (3), destined to receive a screw (4) to fix these two pieces together.

FIG. 1

FIG. 2

FIG. 3

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 308 738  (RICHTER) <br> – – – | | A 61 <br> C 8/00 |
| A | EP-A-0 136 532  (KOCH) <br> – – – | | |
| A | US-A-3 958 333  (HEIMANSOHN) <br> – – – – – | | |

**TECHNICAL FIELDS SEARCHED (Int. Cl.5)**

A 61 C

The present search report has been drawn up for all claims

| Place of search | Date of completion of search | Examiner |
|---|---|---|
| The Hague | 11 December 90 | VANRUNXT J.M.A. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document